# EUROPÄISCHE PATENTANMELDUNG

(11) **EP 3 911 115 A1**
(43) Veröffentlichungstag der Anmeldung: **17.11.2021**
(21) Anmeldenummer: 21153426.8
(22) Anmeldetag: 26.01.2021
(51) Int. Cl.: H05B 1/02, H05B 3/84, B60S 1/02

(54) **BILDERFASSUNGSVORRICHTUNG MIT HEIZEINRICHTUNG**

(30) Priorität: 13.05.2020 DE 102020112933
(71) Anmelder: K.L. Kaschier- und Laminier GmbH, 48455 Bad Bentheim-Gildehaus (DE)
(72) Erfinder: Gilke, Wolfram, 70195 Stuttgart (DE); Schulze Wehninck, Rembert, 82327 Tutzing (DE)
(74) Vertreter: Cohausz Hannig Borkowski Wißgott

(57) **Zusammenfassung**

Die Erfindung betrifft eine Bilderfassungsvorrichtung mit einer durch eine Heizeinrichtung erwärmten Streulichtblende, wobei die Vorrichtung insbesondere die Heizeinrichtung einen Temperatursensor aufweist, durch den ab einer vorbestimmten Temperatur die Spannung zur Heizeinrichtung heruntergefahren oder abgeschaltet wird.

## Beschreibung

Die Erfindung betrifft eine Bilderfassungsvorrichtung mit einer durch eine Heizeinrichtung erwärmten Streulichtblende.

Bilderfassungsvorrichtungen auf der Rückseite einer Kraftfahrzeugwindschutzscheibe haben das Problem, dass sich Kondenswasser an den Innenflächen in Form von Wassertropfen niederschlägt oder auch sich Eis ablagert. Um dies nach dem Starten des Kraftfahrzeugs so schnell wie möglich abzubauen, ist es bekannt, mit einer Heizeinrichtung insbesondere in Form einer Streulichtblende mit Heizfolie schnell eine hohe Temperatur zu erzeugen. Dies kann aber abhängig von der bestehenden Außen- und Innentemperatur dazu führen, dass sehr schnell zu hohe Temperaturen erzeugt werden, die der Bilderfassungsvorrichtung schaden.

Aufgabe der Erfindung ist es, eine Bilderfassungsvorrichtung so zu verbessern, dass schädliche hohe Temperaturen stets sicher verhindert werden.

Diese Aufgabe wird erfindungsgemäß dadurch gelöst, dass die Bilderfassungsvorrichtung insbesondere die Heizeinrichtung einen Temperatursensor aufweist, durch den ab einer vorbestimmten Temperatur die Spannung (Stromzufuhr) zur Heizeinrichtung heruntergefahren oder abgeschaltet wird.

Hierdurch ist sichergestellt, dass innerhalb der Bilderfassungsvorrichtung Kondenswasser und Eisbildungen nach Start des Kraftfahrzeugs sehr schnell entfernt werden und hierbei keine schädlich hohen Temperaturspitzen entstehen. Dies bei einfacher Konstruktion und sicherer Funktion.

Vorzugsweise wird vorgeschlagen, dass die Heizvorrichtung einen die Temperatur steuernden Regelkreis aufweist. Ferner kann die Heizvorrichtung einen Bimetall-Schalter aufweisen.

Ein vorteilhaftes Ausführungsbeispiel der Bilderfassungsvorrichtung wird im Folgenden näher beschrieben.

Auf der Rückseite einer Kraftfahrzeugwindschutzscheibe ist eine Bilderfassungsvorrichtung befestigt mit einer Kamera, die den Raum vor dem Kraftfahrzeug erfasst. In Blickrichtung der Kamera weist die Bilderfassungsvorrichtung eine Streulichtblende auf in Form eines gleichschenkligen Trapezes und mit einer Vorderseite, die eine Streulicht auffangende Struktur besitzt.

Die Streulichtblende besitzt hinter der Streulicht auffangenden Struktur als Heizelement eine elektrische Heizfolie, die rückseitig mit einer stabilen Isolierschicht aus Kunststoff bedeckt ist und die Streulichtblende in Form hält.

Die elektrische Heizfolie ist in einem Stromkreis gesetzt, in dem sich ein Schalter befindet, durch den der Stromkreis unterbrochen wird. Dies erfolgt vorzugsweise durch einen Bimetall-Schalter, der sich ab einer vorbestimmten Temperatur öffnet.

## Patentansprüche

1. Bilderfassungsvorrichtung mit einer durch eine Heizeinrichtung erwärmten Streulichtblende, **dadurch gekennzeichnet, dass** die Vorrichtung insbesondere die Heizeinrichtung einen Temperatursensor aufweist, durch den ab einer vorbestimmten Temperatur die Spannung zur Heizeinrichtung heruntergefahren oder abgeschaltet wird.

2. Bilderfassungsvorrichtung nach Anspruch 1, **dadurch gekennzeichnet, dass** die Heizvorrichtung einen die Temperatur steuernden Regelkreis aufweist.

3. Bilderfassungsvorrichtung nach einem der vorherigen Ansprüche, **dadurch gekennzeichnet, dass** die Heizvorrichtung einen Bimetall-Schalter aufweist.
